# NEUE EUROPÄISCHE PATENTSCHRIFT

(11) **EP 1 392 078 B2**
(45) Veröffentlichungstag und Bekanntmachung des Hinweises auf die Entscheidung über den Einspruch: **18.04.2012**
(45) Hinweis auf die Patenterteilung: 01.07.2009
(21) Anmeldenummer: 03016470.1
(22) Anmeldetag: 22.07.2003
(51) Int. Cl.: H04Q 9/00, G01D 4/00

(54) **Verfahren zum unidirektionalen Übertragen von Messdaten**
Method for unidirectional transmission of measuring data
Procédé de transmission unidirectional de données de mesure

(30) Priorität: 20.08.2002 DE 10238692
(43) Veröffentlichungstag der Anmeldung: 25.02.2004
(73) Patentinhaber: Ziegler, Horst Prof. Dr., D-33100 Paderborn (DE)
(72) Erfinder: Ziegler, Horst Prof. Dr., D-33100 Paderborn (DE)
(74) Vertreter: Ostertag, Reinhard

(56) Entgegenhaltungen:
- EP-A1- 1 077 438
- WO-A-97/25699
- DE-A1- 19 959 545
- US-A- 5 883 886

## Beschreibung

Die Erfindung betrifft ein Verfahren zum unidirektionalen Übertragen von Meßdaten gemäß dem Oberbegriff des Anspruchs 1.

Ein derartiges Verfahren ist aus der DE 42 25 042 A1 bekannt.

Das bekannte Verfahren ist dazu bestimmt, jährliche Verbrauchskostenablesungen vorzunehmen, ohne daß ein Ableser sich in Häuser bzw. Wohnungen zu den einzelnen Wärmemeßgeräten (Endgeräten) begeben muß.

Dadurch, daß die Datenübertragung nur unidirektional vom Wärmemeßgerät zu der Empfangseinheit erfolgt, brauchen die Wärmemeßgeräte oder andere Sensoren keine Empfangsteile aufzuweisen und können somit stromsparend arbeiten, da sie nur zu bestimmten kurzen Sendezeiten kurzfristig zum Senden aktiviert werden. Dadurch, daß die Sendezeiten wechselnd bestimmt werden, werden Dauerkollisionen zwischen Funktelegrammen verschiedener Wärmemeßgeräte oder Sensoren verhindert. Solche Kollisionen würden im Laufe der Zeit sonst eintreten, wenn in den Endgeräten enthaltene Quarzoszillatoren im Laufe der Zeit umweltbedingt oder fertigungsbedingt driften.

In der vorliegenden Beschreibung und den Ansprüchen soll der Begriff Endgerät als Oberbegriff für Verbrauchsmeßgeräte, Sensoren und andere Datenquellen mit Telemetriefunktion verstanden werden.

Unter Ablesezeitraum soll der Zeitraum verstanden werden, innerhalb dessen jeweils eine neue Information von einem Endgerät benötigt wird.

Sendezeiten, sind die jeweils vom letzten Funktelegramm gerechneten Zeitabstände, in denen die Endgeräte jeweils in ihnen zusammengestellte Datenstrings als Funktelegramme übermitteln. Wegen der Gefahr einer Störung der Funktelegramme durch andere Nutzer (eingeschlossen andere Endgeräte) auf den verwendeten Jedermanns-Funkkanälen oder durch Primärnutzer werden die Datenstrings in jedem Ablesezeitraum mehrmals übermittelt, so daß in der Regel mindestens ein Funktelegramm ordnungsgemäß an der Empfangseinheit empfangen werden kann.

Unter Sendezeit-Sollwerten sind vorgegebene gewünschte Sendezeiten für die Endgeräte zu verstehen.

Die Sendezeit-Sollwerte für eine betrachtetes Endgerät bilden eine abgeschlossene Gruppe von Sollwerten, die zyklisch verwendet werden. Diese Gruppe wird als Sendezeit-Sollwertsatz bezeichnet.

Die oben angesprochene wechselnde Vorgabe der verschiedenen Sendezeitpunkte für die verschiedenen Endgeräten kann nicht nur unter Nutzung physikalischer Meßwerte wie Temperatur oder Rauschspannungen erfolgen, man kann die wechselnde Verteilung auch unter Anwendung mathematischer Verfahren vornehmen, z.B. unter Verwendung eines Zufallszahlengenerators. Ziel ist es, einen gemeinsamen Funkkanal oder ein gemeinsames Funkkanalbündel möglichst gleichmäßig und mit möglichst wenig Kollisionen zu nutzen.

Nach dem in der DE 42 25 042 A1 beschriebenen Verfahren ist es möglich, den Stromverbrauch in den Endgeräten klein zu halten.

Wünschenswert wäre es, wenn auch ein Empfangsteil der Empfangseinheit nur dann aktiviert würde, wenn ein Funktelegramm von einem mit der Empfangseinheit zusammenarbeitenden Endgerät zu erwarten ist.

Ein derartiges Scharfschalten des Empfangsteils der Empfangseinheit ist insbesondere auch dann von Interesse, wenn die Empfangseinheit selbst auch aus einer Batterie versorgt wird.

Durch die vorliegende Erfindung soll daher ein Verfahren gemäß dem Oberbegriff des Anspruchs 1 so weitergebildet werden, daß weiterhin eine gleichmäßige und kollisionsminimierte Ausnutzung eines Funkkanals oder mehrerer Funkkanäle gewährleistet ist, zugleich aber die Empfangseinheit weiß, zu welchem Zeitpunkten ein Funktelegramm eines Endgerätes zu erwarten ist.

Diese Aufgabe ist erfindungsgemäß gelöst durch ein Verfahren mit den im Anspruch 1 angegebenen Merkmalen.

Bei dem erfindungsgemäßen Verfahren sind weiterhin die Zeitpunkte, zu denen die Endgeräte Funktelegramme erzeugen, insgesamt wechselnd statistisch über der Zeit verteilt, und zusätzlich kann eine weitere Kollisionsminimierung dadurch erfolgen, daß man ggf. zwischen einer Mehrzahl von Funkkanälen wechselnd umschaltet.

Ein Funktelegramm ist somit charakterisiert durch den Zeitabstand zum vorhergehenden Funktelegramm, in dem das Funktelegramm übertragen wird, sowie den Funkkanal, auf welchen die Übertragung erfolgt. Diese beiden Kenngrößen werden in den Ansprüchen und der Beschreibung zusammen als Sendezeitwert bezeichnet. Der Sendezeitwert ist somit ein Zahlenpaar, und man kann sich den Sendezeitwert als Verkettung von zwei Strings vorstellen, von denen ein Teil den Zeitpunkt, der andere Teil den Funkkanal charakterisiert. Bei Einkanalübertragung entfällt natürlich die zweite Zahl bzw. der zweite String.

Bei dem erfindungsgemäßen Verfahren ist der Funkkanal bzw. eine mehrere Funkkanäle umfassende Funkkanalgruppe durch eine insgesamt wechselnde Verteilung von Sendezeitwerten gleich und kollisionsminimiert ausgelastet. Für die einzelnen Endgeräte ist aber insgesamt bekannt, in welchen zeitlichen Abständen sie ein Funktelegramm übertragen, und entsprechend kann die Empfangseinheit ihr Empfangsteil jeweils für den Empfang eines Funktelegramms von einem der Endgeräte scharf schalten und im übrigen in einen stromsparenden Standby-Zustand stellen.

Die Verteilung der Sendezeitwerte auf die verschiedenen Endgeräte kann schon bei der Herstellung in der Fabrik erfolgen. Man kann dann die Endgeräte generell in Verbindung mit beliebigen Empfangseinheiten und in der Nachbarschaft beliebiger anderer Endgeräte verwenden. Da die Zählerstände nur in größeren Abständen ausgelesen zu werden brauchen, verbleibt auch bei einer großen Anzahl in einem Ablesezeitraum unterscheidbarer Sendezeiten die jedem Endgerät oder Sensor zuteilbare Sendezeit ausreichend lang (Größenordnungsmäßig 100 ms oder weniger). Anwendungen, bei denen Zählerstände wenige Male oder einmal pro Tag oder noch seltener abgelesen werden, lassen sich dadurch gut handhaben.

Bei stark höherer Ablesefrquenz einer großen Anzahl von Endgeräten, kann die zeitliche Teilung eines Abfragezeitraumes zu zu kleinen Sendezeiten führen. Dann kann man die Verteilung der Sendezeitfensterwerte auf einen bestimmten Satz von Endgeräten vornehmen, der einer bestimmten Empfangseinheit zugeordnet ist. Auch dies läßt sich bei der Herstellung der Endgeräte und der Empfangseinheit einfach bewerkstelligen. Allerdings ist in diesem Fall dann Vorsorge dafür zu tragen, daß bei Installation weiterer Endgeräte die Zuteilung von Sendezeiten zu diesen neuen Endgeräten unter Berücksichtigung der schon verteilten Sendezeiten und unter Verwendung des gleichen wechselnden Mechanismus erfolgt, der auch für die Festlegung der ursprünglichen Sendezeiten verwendet wurde. Entsprechend muß dann auch die Empfangseinheit programmiert werden.

Vorteilhafte Weiterbildungen der Erfindung sind in den Unteransprüchen angegeben.

Ein Verfahren gemäß Anspruch 2 läßt sich mit besonders einfachen schaltungstechnischen Mitteln durchführen. Auch läßt sich bei bekannter Geräte- oder Indentifikationsnummer schon aus dem Abstand zweier aufeinanderfolgender Funktelegramme leicht bestimmen, in welcher Phase des Zyklus der Sendezeitfortschaltung das betrachtete Endgerät gerade steht. Es ist somit nicht unbedingt nötig, Angaben zu dieser Phase (z.B. der Zyklusnummer) mit im Datenpaket zu übertragen.

Die Weiterbildung des Verfahrens gemäß Anspruch 3 hat den Vorteil, daß man aus der Abfolge der Sendezeit-Sollwerte, die man empfangsseitig einem der Endgeräte Sensor zuordnen kann, eindeutig rückschließen kann auf diejenige Stellung des Zyklus, bei welcher das Endgerät steht. In solchen Fällen, in denen ein Funktelegramm nicht richtig empfangen wurde, kann aus den Sendezeit-Istwerten der zurückliegenden Übertragungen mit einer guten Trefferquote auf den Sendezeit-Sollwert für die nächste Übertragung geschlossen werden.

Das Verfahren gemäß Anspruch 4 ist im Hinblick auf eine einfache Festlegung der Sendezeiten unter Verwendung eines Taktgebers von Vorteil, welcher eine der Zeiteinheit entsprechende Periode aufweist.

Das Verfahren gemäß Anspruch 5 gestattet die Bestimmung der Sendezeiten ohne großen Rechenaufwand, mit einfacher Hardware und rasch.

Die Weiterbildung der Erfindung gemäß Anspruch 6 ist im Hinblick darauf von Vorteil, Einflüsse von fertigungs- oder umweltbedingten Drifts in der Frequenz der in den Endgeräten verwendeten Taktgebern auf die Zuordnung eines Sendezeit-Istwertes zu einem Sendezeit-Sollwert auszuräumen.

Bei einem Verfahren gemäß Anspruch 7 hat man den Vorteil, daß eine der Sendezeiten sich so stark von allen anderen Sendezeiten unterscheidet, daß die entsprechende Sendezeit einer Stelle des Zyklus der Sendezeit-Sollwerte aus sich selbst heraus zugeordnet werden kann. Dies erhöht die Sicherheit einer bei Datenverlust notwendig werdenden Neusynchronisation der Empfangseinheit auf ein Endgerät oder einen Sensor.

Bei einem Verfahren nach Anspruch 8 ist eine Neusynchronisation der Empfangseinheit auf die Endgeräte auch dann rasch und sicher gewährleistet, wenn für eine Mehrzahl von Endgeräten die Synchronisation verloren gegangen ist.

Das Verfahren gemäß Anspruch 9 ermöglicht eine sichere und aus einem einzigen Ablesezeitraum erfolgende Synchronisierung des Empfangsteils der Empfangseinheit auf ein Verbrauchsmessgerät oder einen Sensor aus einem einzigen empfangenen markierten Funktelegramm.

Bei dem Verfahren gemäß Anspruch 10 ist automatisch gewährleistet, daß die Sendezeitwerte für jedes Verbrauchsmessgerät / jeden Sensor in für diesen einmaliger Weise erfolgt.

Das Verfahren gemäß Anspruch 11 läßt sich mit digitalen Rechenkreisen besonders einfach durchführen und führt zu wechselnd verteilten Sendezeitwerten, die sich auch für benachbarte Gerätenummern stark unterscheiden. Dies ist im Hinblick auf eine gute Gleichverteilung der wechselnd bestimmten Sendezeitwerte über den gesamten zur Verfügung stehenden Wertebereich von Vorteil. Auch im Hinblick auf eine Erweiterung eines lokalen Datenübertragungsnetzes durch weitere Endgeräte ist das Verfahren gemäß Anspruch 10 vorteilhaft.

Die Weiterbildungen der Erfindung gemäß den Ansprüchen 12 bis 15 sind im Hinblick auf die einfache Durchführbarkeit mit digitalen Schaltkreisen und im Hinblick auf die Nutzung einer Technik von Vorteil, die sich bei der Fehlerprüfung von übertragenen Funktelegrammen bewährt hat.

Gemäß Anspruch 16 kann man die Umsetzung der Identifikationsnummer des Endgerätes in einen Sendezeit-Sollwert auch durch Multiplikation der Identifikationsnummer mit einer großen Zahl vornehmen, wobei vom Ergebnis der Multiplikation nur eine vorgegebene Anzahl niederrangiger Bits zur Vorgabe des Sendezeitfenster-Sollwertes dient.

Gemäß Anspruch 17 kann man die stochastische Umsetzung der Identifikationsnummer in einen Sendezeit-Sollwert unter Verwendung von einfachen Hardwarekomponenten durchführen.

Gemäß Anspruch 18 kann man auf einfache Weise unterschiedliche wechselnd vorgegebene Sendezeit-Sollwerte aus der Gerätenummer ableiten.

Den gleichen Vorteil erhält man auch beim Verfahren gemäß Anspruch 19, wobei durch die Zuordnung mehrerer Identifikationsnummern zu einem Endgerät oder Sensor eine noch größere Sicherheit gegen statistisch seltene Funktelegrammüberlappungen gegeben ist. So kann man z.B. bei Darstellung der Gerätenummern im Dezimalsystem die Einer als ein und demselben Endgeräten zugeordnete unterschiedliche "logische Gerätenummern" nehmen und die eigentliche für den Verbrauchsmessgeräten charakteristische Gerätenummer durch die Zehner und höheren Stellen der Identifikationsnummer bilden.

Bei dem Verfahren gemäß Anspruch 20 bzw. 22 kennt die Empfangseinheit für alle mit ihr zusammenarbeitenden Endgeräte in etwa deren jeweilige Sendezeiten, da sie die entsprechenden Sendezeit- Sollwerte aus der Gerätenummer unter Verwendung des gleichen Algorithmus gewinnt, wie er auch bei der Bestimmung der Sendezeitwerte in den Endgeräten verwendet wurde, bzw. die Sendezeit-Sollwerte in einem Speicherfeld der Empfangseinheit liegen.

Normalerweise wird bei dem erfindungsgemäßen Verfahren so gearbeitet, daß in der Empfangseinheit nach dem Empfang eines Funktelegramms von einem Endgerät oder Sensor der Eingangszeitpunkt des Funktelegramms festgehalten wird und von diesem dann das Intervall bis zum nächsten zu erwartenden Funktelegramm gerechnet wird. Aufgrund nicht exakt synchronen Gangs der Uhren in den Endgeräten und in der Empfangseinheit wird in der Regel zwischen dem Zeitpunkt, zu welchem ein Funktelegramm erhalten wird, (Sendezeit-Istwert) und demjenigen Zeitpunkt, zu dem es erwartet wurde (Sendezeit-Sollwert) ein kleiner Zeitunterschied liegen. Diese Zeitunterschiede können sich im Laufe der Zeit aufaddieren, wenn die Uhr in einem Endgerät und die Uhr in der Empfangseinheit z.B. unterschiedlicher Temperatur ausgesetzt sind, ihre Schwingquarze fertigungsbedingt unterschiedlich schwingen oder die Spannung nachläßt, die zur Versorgung des Verbrauchsmessgerätes zur Verfügung steht.

Die Weiterbildung der Erfindung gemäß Anspruch 23 ermöglicht es, derartige systematische Abweichungen zwischen Sendezeit-Sollwert und Sendezeit-Istwert bei der Berechnung des nächsten Zeitpunkts, zu welchem der Empfangsteil der Empfangseinheit aktiviert wird, und dessen Dauer (Empfangszeit) zu berücksichtigen. Eine enge und trotzdem den Empfangsteil vor Eintreffen eines Funktelegramms sicher aktivierende Bestimmung des nächsten Empfangszeits der Empfangseinheit ist im Hinblick auf geringen Stromverbrauch von Vorteil.

Bei dem Verfahren gemäß Anspruch 24 können noch weitere systematische Abweichungen der Sendezeit-Istwerte von den Sendezeit-Sollwerten kompensiert werden. So erlauben z.B. bei einem Sammelverbrauchsmesser die vorhergehend empfangenen Zählerstände einen Rückschluß auf die Temperatur, welcher das Endgerät oder der Sensor ausgesetzt ist und damit eine Temperaturkompensation. Weitere Angaben über die Temperatur am Ort des Endgerätes können z.B. auch Temperaturangaben aus dem Wetterbericht oder dgl. sein. Schließlich weiß die Empfangseinheit auch aus den vergangenen Datenübertragungen insgesamt, wie lange sich ein bestimmtes Endgerät schon im Betrieb befindet. Hieraus kann dann entweder rein aus der Betriebszeit oder unter zusätzlicher Berücksichtigung des Zählerstands auf den Zustand der Langzeitbatterie geschlossen werden, die sich in dem Endgerät befindet. Dies ermöglicht eine weitere Kompensation unter Berücksichtigung des Batterie-Ladezustands.

Die Weiterbildung der Erfindung gemäß Anspruch 25, 26 und 27 gestattet es der Empfangseinheit, sich bei Verlust der Synchronisierung mit einem Endgerät wieder sicher auf deren Phase beim zyklischen Durchlaufen der Sendezeit-Sollwerte einzustellen.

Dabei ist das Vorgehen gemäß Anspruch 27 besonders vorteilhaft, weil das Herausheben eines Funktelegrammes so erfolgt, daß die volle Kapazität des Funktelegrammes für die Datenübertragung erhalten bleibt.

Mit der Weiterbildung der Erfindung gemäß Anspruch 28 wird erreicht, daß die Sendezeit-Sollwerte nicht nur in den Zeiteinheiten der internen Takrgeneratoren der Endgeräte statistich verteilt sind sondern auch in der Echtzeit.

Die statistische Gleichverteilung in der Echtzeit läßt sich gemäß Anspruch 29 mit wenig Hardware- und Rechenaufwand erhalten.

Nachstehend wird die Erfindung anhand von Ausführungsbeispielen unter Bezugnahme auf die Zeichnung näher erläutert. In dieser zeigen:
- Figur 1: ein Blockschaltbild eines Wärmeverbrauchsmessers mit Telemetrieeinrichtung;
- Figur 2: ein Blockschaltbild einer Empfangseinheit, die zum Erfassen der Zählerstände einer Vielzahl von Verbrauchsmessern nach Figur 1 dient;
- Figur 3: ein Flußdiagramm einer Hauptroutine der Empfangseinheit;
- Figur 4: ein Flußdiagramm einer Arbeitsroutine der Empfangseinheit, die dazu dient, die Empfangszeitfenster der Empfangseinheit bezüglich systematischer Synchronisationsfehler zwischen den Uhren von Verbrauchsmessern und Empfangseinheit zu kompensieren; und
- Figuren 5 bis 8:: ähnliche Ansichten wie Figur 1, in denen jeweils ein abgewandelter Verbrauchsmesser gezeigt ist.

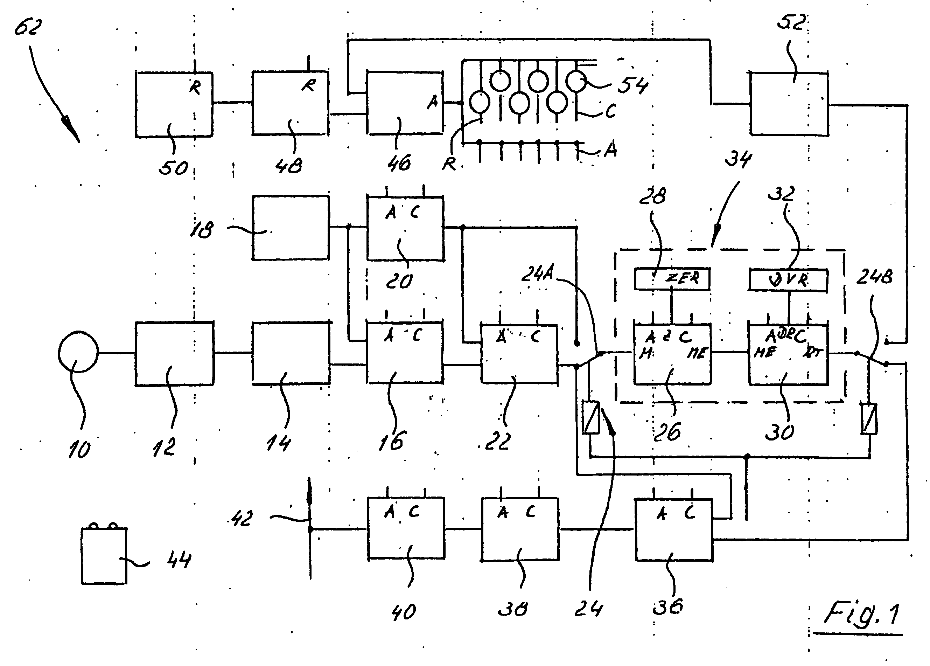

Figur 1 zeigt einen Wärmeverbrauchsmesser, wie er zur Heizkostenabrechnung in Gebäuden verwendet werden kann.

Ein Temperaturfühler 10 ist an einen A/D-Wandler 12 angeschlossen. Das Ausgangssignal des A/D-Wandlers 12 wird in einem Zähler 14 aufsummiert. Der Zählerstand wird in Paralleldarstellung auf einen Eingang eines Zeichenverkettungskreises 16 gegeben. Dieser erhält an einem zweiten Eingang ein weiteres Signal in Paralleldarstellung von einem Festwertspeicher 18. Dieses Signal stellt eine in der Fabrik dem Verbrauchsmesser zugeordnete individuelle Gerätenummer dar, die in den Ansprüchen und der vorliegenden Beschreibung auch als Identifikationsnummer bezeichnet wird.

Das Ausgangssignal des Festwertspeichers 18 wird ferner auf ein Schieberegister 20 gegeben. Dieses rotiert den Registerinhalt jeweils um eine Stelle, wenn es an einer Taktklemme C einen Impuls erhält.

Die in Paralleldarstellung vorliegenden Ausgangssignale des ersten Zeichenverkettungskreises 16 und des Schieberegisters 20 werden auf die Eingänge eines weiteren Zeichenverkettungskreises 22 gegeben.

Das Ausgangssignal des Zeichenverkettungskreises 22 gelangt über einen ersten Schaltkontakt 24A eines durch eine übergeordnete nicht dargestellte Ablaufsteuerung des Verbrauchsmessers steuerbaren Schalters 24 auf eine Eingangsklemme M eines weiteren Zeichenverkettungskreises 26. Letzterer ist mit einem weiteren Eingang Z mit dem Ausgang eines Festwertspeichers 28 verbunden, der ein Wort (16 Bit) oder ein Doppelwort (32 Bit) groß sein kann. Der Festwertspeicher 28 ist mit einer Zahl ZER gefüllt, die beim hier betrachteten Ausführungsbeispiel gleich 0 gewählt ist.

An einem Ausgang ME des Zeichenverkettungskreises 26 erhält man somit eine Vielwort-Zeichenkette bestehend aus einem oder mehreren Worten, die den Zählerstand charakterisieren, einem oder mehreren Worten, welche die Gerätenummer charakterisieren, und der festen Erweiterung ZER, die beim betrachteten Ausführungsbeispiel aus dem Wort "OH" besteht. Der Ausgang des Zeichenverkettungskreises 26 ist mit einem Dividendeneingang ME eines Divisionskreises 30 verbunden. Letzere erhält an einem Divisoreingang DR einen fest vorgegebenen Divisor DVR aus einem Festwertspeicher 32.

Der Divisionskreis 30 arbeitet so, daß er den Dividenden durch den Divisor in einer Ganzzahl-Division teilt, wodurch man einen Quotienten und einen nicht mehr teilbaren Rest erhält. Der Quotient ist hier nicht von Interesse und wird verworfen, der nicht mehr teilbare Rest wird an einer Ausgangsklemme RT bereitgestellt.

Im einzelnen erfolgt die Division im Divisionskreis 30 nach der sog. CRC-Arithmetik. Division in CRC-Arithmetik bedeutet kurz eine mehrfache Subtraktion des Divisors vom Dividenden unter Vernachlässigung von Überträgen.
Eine solche Division läßt sich mit digitalen Schaltkreisen einfach und rasch durchführen.

Man erkennt, daß sich der Rest RT auch für benachbarte Zahlen ME stark unterscheiden kann.

Aus diesem Grund werden Baugruppen, wie sie durch die Schaltkreise 26 bis 32 gebildet sind, auch dazu verwendet, Prüfzahlen bzw. Prüfstrings zu bestimmen, anhand welcher Fehler in Datenübertragungsstrecken erkannt werden können. Die Schaltkreise 26 bis 32 bilden dabei einen insgesamt mit 34 bezeichneten Prüfstring-Rechenkreis 34.

Die am Ausgang des Zeichenverkettungskreises 22 stehende Daten-Zeichenkette und der am Ausgang des Prüfstring-Rechenkreises erhaltene Prüfstring werden auf die beiden Eingänge eines weiteren Zeichenverkettungskreises 36 gegeben, und zwar die Datenzeichenkette über einen zweiten Schaltkontakt 24B des steuerbaren Schalters 24. Der Ausgang des Zeichenverkettungskreises 36 ist mit einem Parallel/ Seriell-Umsetzer 38 verbunden.

Die aus dem Parallel/Seriell-Umsetzer 38 herausgeschobenen Bits dienen zur Modulation eines Sendeteils 40, welches mit einer Antenne 42 verbunden ist.

Die soweit beschriebene Schaltung dient dazu, ein Funktelegramm zusammenzustellen, welches Zählerstand, Gerätenummer und den Inhalt des Schieberegisters 20 wiedergibt.

Die verschiedenen Schaltkreise des in Figur 1 gezeigten Verbrauchsmessers werden aus einer Langzeitbatterie 44 gespeist, die in der Zeichnung nur schematisch angedeutet ist, ohne ihre verschiedenen Verbindungen zu den durch sie betriebenen Schaltkreisen zu zeigen.

Um Strom zu sparen, haben verschiedene der beschriebenen Schaltkreise, insbesondere das Sendeteil 40 eine Aktivierungsklemme A. Nur dann, wenn diese Aktivierungsklemme mit Signal beaufschlagt ist, werden die Schaltkreise mit Betriebsspannung versorgt.

Das Aktivierungssignal A wird vom Ausgang eines Komparators 46 bereitgestellt.

Der Komparator 46 ist seinem einen Eingang mit dem Ausgang eines Zählers 48 verbunden. Dieser erhält an seinem Eingang langsam laufende Impulse eines Taktgebers 50.
Die Ausgangsimpulse des Taktgebers 50 können z.B. im Abstand von einigen 10s oder im Minutenabstand aufeinanderfolgen, so daß man als Taktgeber einen Schwingquarz mit einem Frequenzteiler verwenden kann, wie sie auch in Uhren Verwendung finden. Das Ausgangssignale des Taktgebers 50 stellt eine Zeiteinheit dar, auf welcher die gesamte Datenübertragung des Wärmemeßgerätes basiert.

Der im Taktgeber 50 enthaltene Frequenzteiler und der Zähler 48 werden durch Signalbeaufschlagung von Klemmen R immer dann zurückgestellt, wenn am Ausgang A des Komparators 46 eine ansteigende Signalflanke entdeckt wird, was dem Beginn der Übertragung eines Funktelegramms entspricht.

Dieses Ausgangssignal des Komparators 46 wird dann erhalten, wenn ein auf seinem zweiten Eingang erhaltenes Signal, welches einer Sendezeit-Sollzeit entspricht, gleich dem Stand des Zählers 48 ist. Die Sendezeit-Sollzeit wird in statistischer Weise von der Gerätenummer des Verbrauchsmessers abgeleitet:

Hierzu wird zunächst die Taktung des Schieberegisters 20 jeweils durch ein einen Datenübertragungszyklus einleitendes Signal, also eine ansteigende Flanke am Ausgang des Komparators 46 bewerkstelligt. Das Ausgangssignal des Schieberegisters 20 kann über den steuerbaren Umschalter 24 anstelle des Ausgangssignals des Zeichenverkettungskreises 22 auf den Eingang M des Prüfstring-Rechenkreises 34 gegeben werden. Der vom letzteren aus dem Inhalt des Schieberegisters 20 berechnete Prüfstring wird als Zahl interpretiert und gelangt über den zweiten Kontakt 24B des steuerbaren Schalters 24, ggf. nach Skalierung in einem Skalierkreis 52, auf den zweiten Eingang des Komparators 46.

Die bei der CRC-Division erhaltenen Reste RT hängen insgesamt in wechselnder Weise von den als Zahlen interpretierten Eingangsstrings M ab. Einzelheiten hierzu sowie Beispiele für Programme, welche CRC-Divisionen durchführen können, finden sich in einem Aufsatz von Ross N. Williams mit dem Titel "A painless guide to CRC error detection algorithms" vom 19.08.1993.

Man erkennt, daß durch die in Figur 1 gezeigte Schaltung einerseits sichergestellt ist, daß bei den vielen Verbrauchsmessern, die in einer Wohnanlage oder einem Stadtteil einer Vielzahl benachbarter Meßstellen zugeordnet sein können, gewährleistet ist, daß die Zeitpunkte, zu denen die Verbrauchsmesser ihre Funktelegramme senden, wechselnd bestimmt sind. Für jeden der Verbraucher ist aber ausgehend von seiner Gerätenummer eindeutig festgelegt, in welchen Abständen seine Funktelegramme aufeinanderfolgen.

Verschiedene Sendezeit-Sollwerte für einen Verbrauchsmesser werden unter Verwendung des selben Algorithmus (CRC-Division im Prüfstring-Rechenkreis 34) werden erhalten, indem man zunächst die Gerätenummer jeweils um eine Stelle rotiert. Dieses Rotieren erfolgt beim hier betrachteten Ausführungsbeispiel jeweils zu Beginn eines Datenübertragungszyklus, wenn die ansteigende Flanke des Ausgangssignals des Komparators 46 das Schieberegister 20 ansteuert. Alternativ kann man die Ansteuerung des Schieberegisters 20 natürlich auch die abfallende Signalflanke des Komparators 46 bewerkstelligen.

Anschließend wird für die rotierte Gerätenummer dann wieder die CRC-Division durchgeführt, und der Rest dient als neuer Sendezeit-Sollwert.

Beim obigen Ausführungsbeispiel wurde auch unterstellt, daß das Schieberegister 20 gleiche Breite hat wie der Festwertspeicher 18. Es versteht sich, daß man bei aus verwaltungstechnischen Gründen gewählten sehr langen Gerätenummern auch nur einen Teilstring der am Ausgang des Festwertspeichers 18 stehenden Gerätenummer auf das Schieberegister 20 geben kann.

In Figur 1 sind bei 54 noch verschiedene Verzögerungskreise angedeutet, über welche aus dem Aktivierungssignal A Steuersignale C (und dauch Rückstellsignale R) gewonnen werden, die in geeigneter Phasenlage auf die verschiedenen Schaltkreise gegeben werden, die mit einer C-Steuerklemme versehen sind, um diese zum geeigneten Zeitpunkt zum Durchführen ihrer Operationen zu veranlassen.

In Abwandlung des oben beschriebenen Ausführungsbeispieles kann man anstelle des Divisionskreises 30 auch einen Multiplikationskreis verwenden, welcher an seiner einen Eingangsklemme dann direkt mit dem Ausgangssignal des Schieberegisters 20 beaufschlagt wird (bei entsprechender Stellung des Schaltkontaktes 24A; der Zeichenverkettungskreis 26 wird bei diesem Ausführungsbeispiel weggelassen) und an seinem anderen Eingang einen Multiplikator enthält, der im Festwertspeicher 32 gehalten wird. Dieser Multiplikator ist eine große Zahl, so daß man als Produkt der Multiplikation ebenfalls eine große Zahl erhält. Von dieser wird nur eine vorgegebene Anzahl der niederrangigsten Bits als Zufallszahl verwendet.

Ein solcher Multiplikator kann ebenfalls CRC-ähnlich arbeiten, indem er Additionen unter Verwerfen von Überläufen durchführt.

Im übrigen arbeitet der Prüfstring-Rechenkreis 34 bei dieser abgewandelten Ausführungsform ähnlich wie unter Figur 1 für den dortigen Prüfstring-Rechenkreis 34 beschrieben.

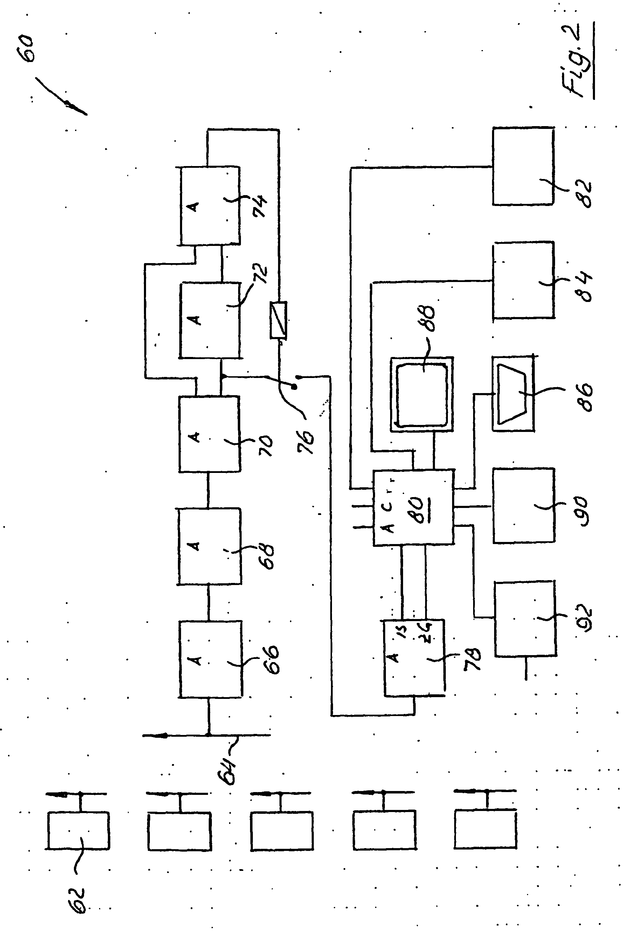

Figur 2 zeigt schematisch den Aufbau einer Empfangseinheit 60, die mit einer Vielzahl von Verbrauchsmessern 62 zusammenarbeitet, wie sie obenstehend unter Bezugnahme auf Figur 1 beschrieben wurden.

Eine Antenne 64 empfängt die von den Verbrauchsmessern 62 zu unterschiedlichen wechselnd vorgegebenen Zeitpunkten abgesandten Funktelegramme. Das Ausgangssignal der Antenne 64 wird in einem Signalformkreis 66 entrauscht und in eine saubere Bitfolge umgesetzt. Letztere wird in einem Seriell/Parallel-Umsetzer 68 wieder in Paralleldarstellung umgesetzt.

Von der so erhaltenen Zeichenkette wird in einem Stringzerlegungskreis 70 derjenige Teil abgespalten, der dem Prüfstring entspricht. Der Datenteil des Strings wird über einen Prüfstring-Rechenkreis 72, der gleichen Aufbau aufweist wie der Prüfstring-Rechenkreis 34 in den Verbrauchsmessern 62 auf den einen Eingang eines Komparators 74 gegeben. Letzterer erhält an seinem zweiten Eingang den aus dem übertragenen Funktelegramm abgespaltenen Prüfstring.

Stimmt das Ausgangssignal des Prüfstring-Rechenkreises 72 mit dem abgespaltenen Prüfstring überein, so schließt das Ausgangssignal des Komparators 74 einen steuerbaren Schalter 76. Über diesen gelangt nun der am Ausgang des Zeichenzerlegungskreises 70 erhaltenen Datenstring auf den Eingang eines weiteren Stringzerlegungskreises 78, in welchem derjenige Teil IS des Gesamtstrings abgespalten wird, der dem Inhalt des Schieberegisters 20 entspricht. Der Teil IS und der dann noch verbleibende Reststring ZG, welcher dem Zählerstand und der Gerätenummer entspricht, werden auf Eingänge eines Rechners 80 gegeben.

Der Rechner 80 arbeitet mit einem Massenspeicher 82, einem Drucker 84, einem Tastenfeld 86 und einem Bildschirm 88 zusammen. Basierend auf der Gerätenummer schreibt der Rechner 80 nun im Massenspeicher 82 den Zählerstand der zu der Gerätenummer gehörenden Verbrauchsstelle fort.

Der Rechner 80 stellt nun anhand einer eigenen Uhr 90 fest, wann das Funktelegramm eingelaufen ist. Dieser Wert wird in einem Feld des Massenspeichers 82 mit abgelegt, in welchem sich schon die Empfangszeiten vorhergehender Funktelegramme des betrachteten Verbrauchsmessers befinden.

Um den hierfür benötigten Speicherplatz zu begrenzen, kann man sich z.B. auf die letzten 128 Funktelegramme eines Verbrauchsmessers beschränken.

Aus dem mit dem Funktelegramm übermittelten Inhalt des Schieberegisters 20 und der Gerätenummer kann der Rechner 80 den Sendezeit-Sollwert für das gerade eingelaufene Funktelegramm ermitteln und dieses vergleichen mit dem Zeitunterschied zwischen dem Empfangs des gerade erhaltenen Funktelegramms und dem Erhalt des vorhergehenden Funktelegramms. Gleiches kann er ggf. für weiter zurückliegende Funktelegramme tun.

Ausgehend aus dem Vergleich der Empfangszeiten und der Sendezeit-Sollwerte für die Vergangenheit kann der Rechner 80 eine zu erwartende Abweichung für den nächsten Sendezeit-Sollwert des betrachteten Verbrauchsmessers ableiten. Diesen nächsten Sendezeit-Sollwert für das Endgerät ( = Empfangszeit-Sollwert für die Empfangseinheit) legt der Rechner 80 ebenfalls in einem Feld seines Massenspeichers 82 ab, welches die nächsten Sendezeit-Sollwerte für alle mit ihm zusammenarbeitenden Verbrauchskreise 54 ausgedrückt in der Zeit seiner lokalen Uhr 90 beinhaltet.

Der Rechner 80 kann dann verschiedene Bausteine der Empfangseinheit 60, die in größerem Umfang Strom verbrauchen, insbesondere den Signalformkreis 66 normalerweise so lange abschalten, bis wieder ein Sendezeit-Sollwert eines Verbrauchsmessers 62 der durch die Uhr 90 gemessenen lokalen Zeit entspricht. Dann aktiviert der Rechner 80 durch Abgabe eines Aktivierungssignals A diejenigen Schaltkreise, die entsprechende Aktivierungsklemmen aufweisen.

Zu Abrechnungszwecken kann der Rechner 80 Abrechnungen auf dem Drucker 84 ausdrucken. Der Drucker 84 kann aber auch durch eine Datenfernübertragungs-Einheit 92 ergänzt oder ersetzt werden. Die Gesamtverwaltung und Gesamtabrechnung der Verbräuche an den verschiedenen Meßstellen kann dann in einem übergeordneten Rechenzentrum erfolgen.

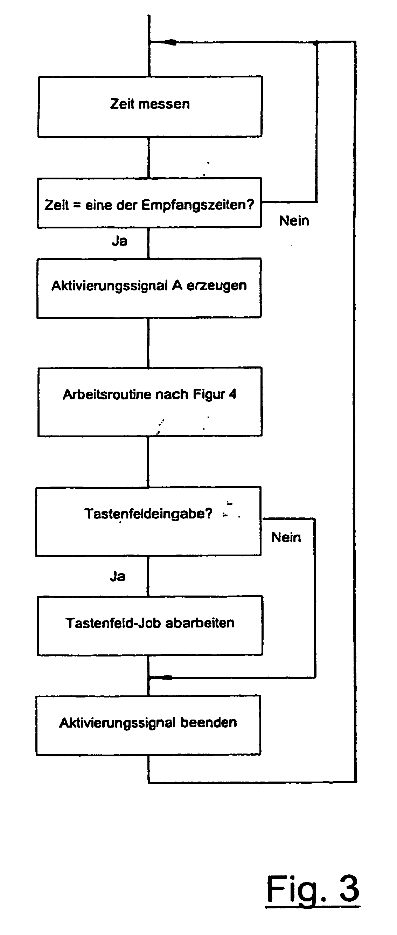

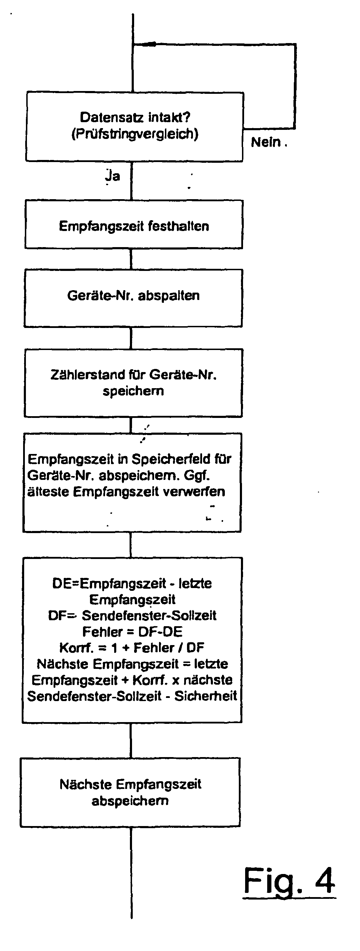

Figur 3 zeigt in Form eines Flußdiagrammes eine Hauptroutine, nach welcher der Rechner 80 arbeitet, und Figur 4 zeigt eine Arbeitsroutine zum Fortschreiben der Zählerstände in der Empfangseinheit und zum Berechnen der nächsten Empfangs-Sollzeit für den betrachteten Verbrauchsmesser.

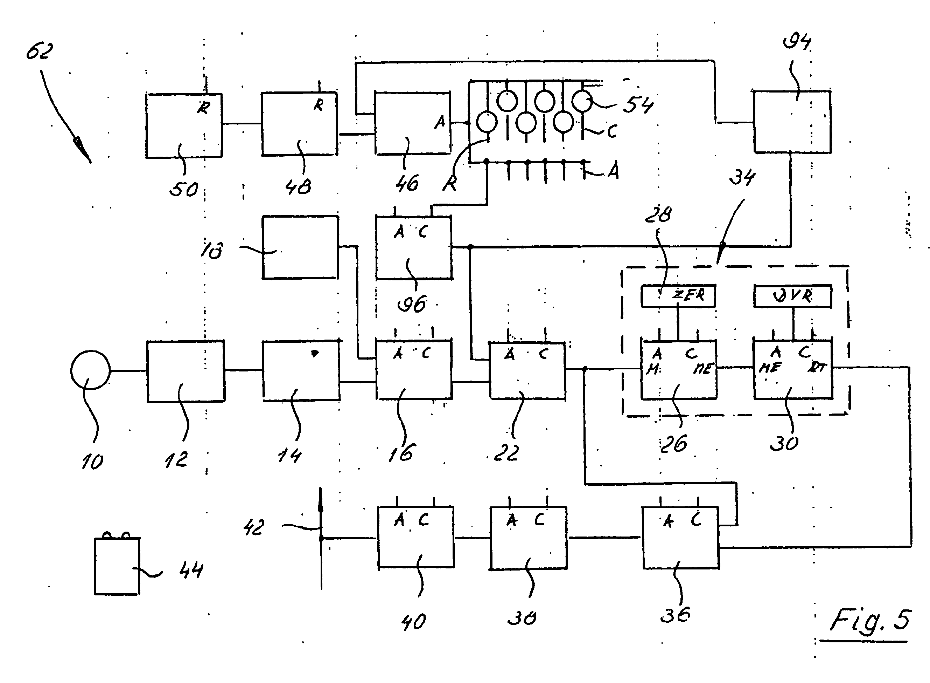

Figur 5 zeigt einen abgewandelten Verbrauchsmesser 62. Schaltkreise, die obenstehend unter Bezugnahme auf Figur 1 erläutert wurden, sind wieder mit den selben Bezugszeichen versehen und brauchen nicht nochmals im einzelnen beschrieben zu werden.

Bei den Verbrauchsmessern nach Figur 5 erhält der Komparator 46 die Sendezeit-Sollzeit vom Ausgang eines Festwertspeichers 94, in welchem ein Satz verschiedener dem Verbrauchsmesser zugeordneter Sendezeit-Sollzeiten abgelegt sind. Diese Sendezeit-Sollzeiten können für die betrachtete Gerätenummer bei der Herstellung in einem Kalibrierrechner genauso bestimmt werden, wie obenstehend unter Bezugnahme auf den Prüfstring-Rechenkreis 34 beschrieben. Die entsprechenden Sendezeit-Sollwerte werden dann ggf. mit einem Skalierfaktor multipliziert in den Festwertspeicher 94 gebrannt.

Der Festwertspeicher 94 wird zyklisch durchadressiert, wozu das Ausgangssignal des Komparators 46 auf einen Zähler 96 gegeben wird, dessen maximaler Zählerstand der Anzahl der im Festwertspeicher 94 abgelegten Sendezeitfenster-Sollwerte entspricht. Nach einem Überlauf zählt der Zähler 96 dann wieder von unten hoch.

Der Verbrauchsmesser 62 nach Figur 5 arbeitet im übrigen gleich wie der in Figur 1 beschriebene. Der nächste Sendezeit-Sollwert läßt sich aus dem Stand des Zählers 96 ableiten, der als Teilstring in das Funktelegramm eingepackt ist.

Bei einem weiter vereinfachten Ausführungsbeispiel, welches ausgehend von Figur 5 möglich ist, kann man den Prüfstring-Rechenkreis 34 auch weglassen und den Ausgang des Zeichenverkettungskreises 26 direkt mit dem Eingang des Parallel/Seriell-Umsetzers 38 verbinden.

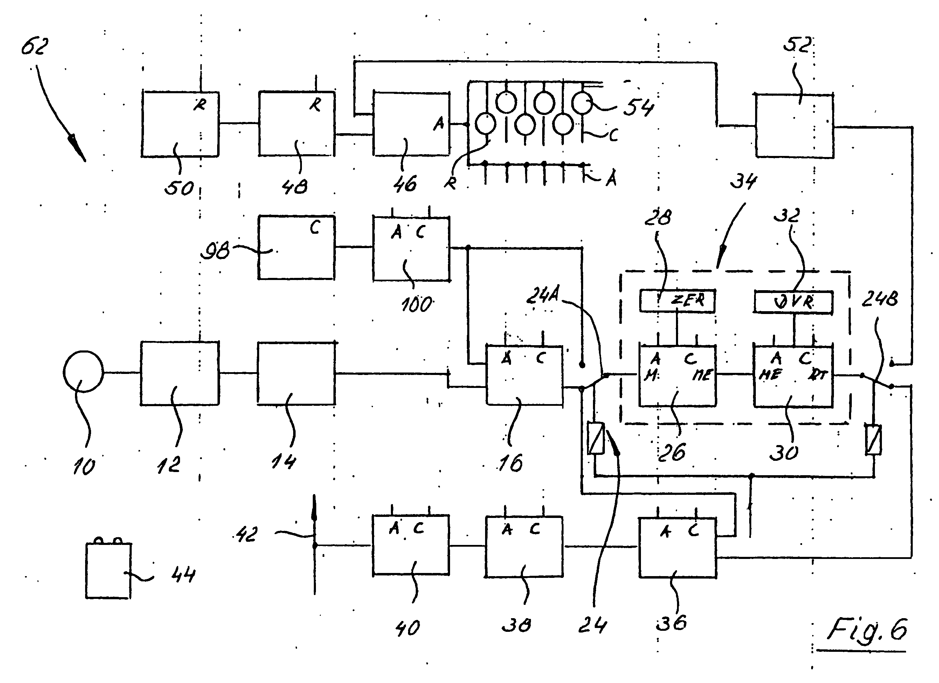

Ein nochmals abgewandeltes Ausführungsbeispiel ist in Figur 6 dargestellt. Schaltungsteile, die unter Bezugnahme auf das ähnliche Ausführungsbeispiel nach Figur 1 dort schon erläutert wurden, sind wieder mit den selben Bezugszeichen versehen und werden nicht nochmals im einzelnen beschrieben.

Ein Zähler 98 wird durch die Ausgangssignale des Komparators 96 hochgezählt. Der Zähler 98 hat so viele Stellen, wie man unterschiedliche Sendezeit-Sollwerte für einen Verbrauchsmesser wünscht. Er kann z.B. von 0 bis 15 zählen und läuft dann über.

Durch das Ausgangssignal des Zählers 98 wird ein Festwertspeicher 100 adressiert, in welchem entsprechend viele unterschiedliche logische Gerätenummern abgelegt sind, die alle dem physikalischen Verbrauchsmesser 62 zugeordnet sind. Diese Gerätenummer wird in dem Zeichenverkettungskreis 16 mit dem Stand des Zählers 14 verkettet. Der Zeichenverkettungskreis 16 ist nun direkt mit der einen Eingangsklemme des steuerbaren Umschalters 24 verbunden.

Die Berechnung der Sendezeit-Sollwerte und die Datenübertragung erfolgt wie oben beschrieben. Die Recheneinheit 80 weiß nun aber, daß die im Festwertspeicher 100 abgelegten logischen Gerätenummern gleichermaßen einer physikalischen Verbrauchsmeßstelle zuzuordnen sind und speichert die jeweils in der Empfangseinheit 60 wiedergewonnenen Zählerstände in einer der physikalischen Meßstelle zugeordneten Speicherzelle ab.

In Abwandlung der obigen Ausführungsbeispiele kann man zusätzlich eine wechselnde Umschaltung des Funkkanales vornehmen, in dem man z.B. das letzte Bit (zwei Funkanäle) oder die letzten beiden Bits (vier Funkkanäle) von dem Divionsrest RT abspaltet und als Adressiersignale für mit unterschiedlicher Frequenz arbeitende Sendeteile 40 oder als Frequenzsteuersignale für ein frequenzsteuerbares Sendeteil verwendet. Die restlichen, führenden Bits des Divisionsrestes RT können dann zur Vorgabe der Sendezeit-Sollzeitpunkte dienen. Der Sollwert (Divisionsrest RT) umfaßt dann somit Soll-Zeit und Soll-Funkkanal.

Die Funktion des unter Bezugnahme auf die Zeichnung oben beschriebenen Verfahrens zum unidirektionalen Übertragen von Meß- oder Verbrauchsdaten läßt sich zusammenfassend wie folgt darstellen:

Jedem der Verbrauchsmeßgeräte wird zunächst eine Identifizierungsnummer zugeordnet. Es sind dies in der Regel fortlaufend vergebene Nummern.

Die Identifizierungsnummern werden durch eine eindeutige Abbildung auf einen anderen Zahlenraum abgebildet, bei dem aufeinanderfolgende Identifizierungsnummern in weit beabstandete abgeleitete Identifizierungsnummern umgesetzt werden. Derartige Abbildungsverfahren können z.B. die oben geschilderte CRC-Division oder auch die oben geschilderte Multiplikation mit einer sehr großen Zahl (ggf.unter Unterdrückung von Überträgen) sein.

Damit wird folgendes erreicht: Hätte man Identifizierungsnummern, die nahe beieinander liegen, so lägen direkt aus den Identifizierungsnummern abgeleiteten Sendezeitfenster-Sollwerte ebenfalls verhältnismäßig dicht, so daß die mittlere Kollisionszahl zwischen Funktelegrammen in die Nähe der maximalen Kollisionszahl wandern kann. Dadurch, daß man die Sendezeit-Sollwerte ausgehend von den abgewandelten Identifizierungsnummern bestimmt, fallen auch die Sendezeit-Sollwerte für Verbrauchsmeßgeräte oder Sensoren mit eng benachbarter Identifizierungsnummer weit auseinander.

Arbeitet man mit 64 Bit langen Wörtern, hat die Identifizierungsnummer ebenfalls 64 Bit, und diese Nummer wird mit einer großen Zahl, die ebenfalls 64 Bit lang ist, multipliziert. Von dem 128 Bit langen Ergebnis der Multiplikation werden nur die untersten 64 Bit verwendet, und diese stellen die abgebildete Identifikationsnummer dar.

Ausgehend von dieser abgebildeten Identifikationsnummer werden dann die Sendezeit-Sollwerte so bestimmt, wie obenstehend beschrieben. Das Ergebnis sind Zahlen, die statistisch zwischen 0 und 2⁶⁴-1 liegen. Die Sendezeit-Sollwerte sind dabei als Vielfache einer Zeitfenstergröße D angegeben, wobei D eine Zeiteinheit ist, die bei den oben beschriebenen Ausführungsbeispielen durch den Taktgeber 50 vorgegeben ist.

Dessen Periode wird so eingestellt, daß für den größten möglichen Sendezeit-Sollwert und die größte denkbare Abweichung in der Frequenz zweier Taktgeber 50 noch gewährleistet ist, daß keine driftbedingte Überlappung von Funktelgrammen erfolgt.

Die Genauigkeit der Taktgeber 50 liegt bei Realisierung mit preiswerten Schwingquarzen im Bereich von +- 100 ppm. Dies entspricht Zeitfehlern von bis zu +- 9 s je Tag. Typischerweise verlangt man ein Auslesen von Verbrauchsmeßgeräten oder Sensoren etwa alle 5 Stunden. Der Zeittakt wird für eine möglichst gleichmäßige Verteilung der Sendezeitpunkte für die verschiedenen Verbrauchsmeßgeräte bzw. Sensoren im Bereich von 2 s gewählt. Dies bedeutet, daß innerhalb der Zeit zwischen zwei aufeinanderfolgenden Übermittlungen jeder Sendezeit-Istwert mit der Auflösung D mit dem Sendezeit-Sollwert übereinstimmt.

Man kann so aus dem Zeitpunkt des Einlaufens eines Datenpaketes in der Empfangseinheit eindeutig auf das jeweilige Verbrauchsmeßgerät oder den Sensor zurückschließen.

Sollte die statistisch erfolgende Zuteilung der Sendezeitfenster-Sollwerte bei einem speziell gewählten Algorythmus für den Zufallsgenerator dazu führen, daß sich unter den den verschiedenen Verbrauchsmeßgeräten oder Sensoren zugeteilten Sendezeit-Sollwerten identische Sollwerte befinden, so kann man auf jeden Fall dadurch auf das jeweilige Verbrauchsmeßgerät oder den jeweiligen Sensor zurückschließen, daß man eine Mehrzahl aufeinander folgender Sendezeit-Istwerte berücksichtigt.

Es versteht sich, daß man ein einlaufendes Funktelegramm in der Empfangseinheit dann auf jeden Fall sicher einem Verbrauchsmeßgerät oder einem Sensor zuordnen kann, wenn sich im Funktelegramm die dem Verbrauchsmeßgerät bzw. dem Sensor zugeordnete Identifizierungsnummer befindet.

Eine sichere Zuordnung eines einlaufenden Funktelegrammes zu einem Verbrauchsmeßgerät oder Sensor allein aus der Empfangszeit macht es notwendig, zwischen den für ein Abfragen vorgegebenen verschiedenen Sendezeitpunkten einen Mindestabstand vorzugeben. Dies sei anhand eines Beispieles erläutert:

Organisiert man die Steuerung der Datenübertragung unter Verwendung von 64 Bit langen Worten und wünscht man 8 Sendeversuche für einen Ablesezeitraum, so hat man für jeden der 8 Sollwerte 8 Bits zur Verfügung. Dies entspricht 256 unterschiedlichen Zeitscheiben. Im Extremfalle könnte einem Verbrauchsmeßgerät bzw. Sensor acht mal die 256. Zeitscheibe zugeteilt werden, einem anderen Endgerät acht mal die Zeitscheibe mit der Nummer 0. Die Signale dieser beiden Endgeräte hätten somit einen zeitlichen Abstand von 8 mal 256 Elementarzeiten = 2 048 Elementarzeiten.
Um einem Überlappen von Funktelegrammen sicher auszuschließen, muß man den Sendezeitfenster-Sollwerten somit einen fixen Grundbetrag von 2 048 Zeittakten dazuaddieren. Das Übertragen von Datenpaketen erfolgt dann jeweils zwischen dem 2 048. und 2 303. Zeittakt. Die Gesamtperiode zwischen aufeinanderfolgenden Datenübertragungsperioden beträgt somit insgesamt 8 mal 2 303 = 18 424 Zeittakte.
Bei einem gewünschten Abstand zwischen aufeinanderfolgenden Auslesungen von etwa 5 Stunden beträgt dann die Zeiteinheit D größenordnungsmäßig 1 s. Bei einem mittleren Abstand von Auslesungen von etwa 4 Minuten wäre die Zeiteinheit etwa 0,013 s.

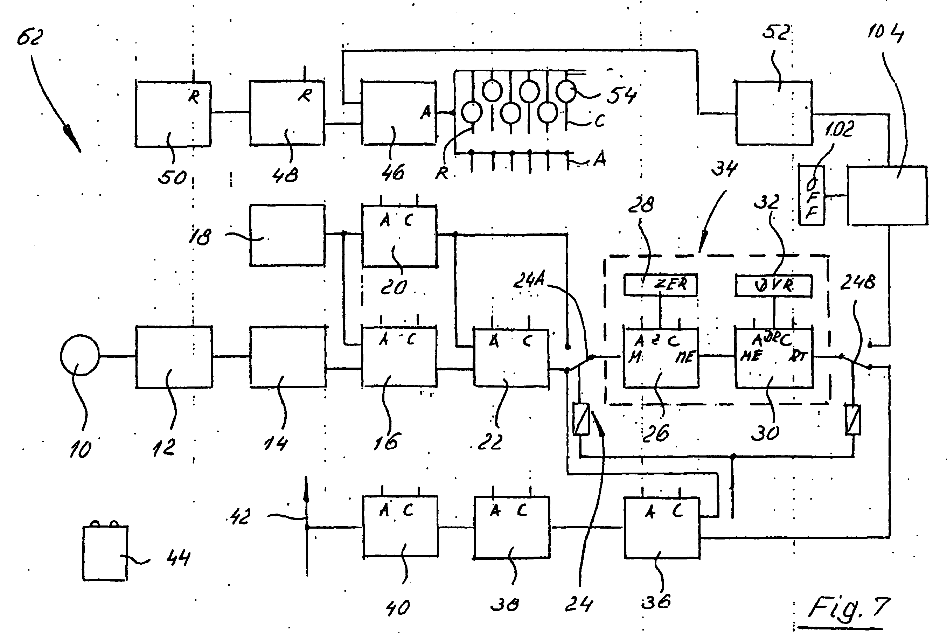

Das Verbrauchsmeßgerät nach Figur 7 arbeitet mit einem solchen Offset der für die Übertragung verwendeten Zeittakte. In einem Speicher 102 ist die Größe des Offsets OFF (beim oben betrachteten Beispiel die Zah 1 2048) gespeichert. Ein Addierer 104 addiert die Größe OFF zu den vom Ausgang des Prüfstring-Rechenkreises 34 erhaltenen Sendezeit-Sollwert hinzu und gibt das Ergebnis auf den Skalierkreis 52.

Um bei verlorengegangener Synchronisation zwischen einem Verbrauchsmeßgerät oder Sensor und der Empfangseinheit wieder eine eindeutige Synchronisation herzustellen, kann man eines der innerhalb einer Ableseperiode erhaltenen Funktelegramme durch eine Markierung auszeichnen. Vorzugsweise wird das jeweils erste Funktelegramm ausgezeichnet.

Eine solche Auszeichnung kann zunächst dadurch erfolgen, daß man in dem Funktelegramm ein Markierbit vorsieht, welches zur Auszeichnung des Funktelegrammes gesetzt wird, im übrigen niederpegelig ist. Erhält die Empfangseinheit ein solches markiertes Funktelegramm, so erkennt sie, daß das betreffende Verbrauchsmeßgerät oder der betreffende Sensor an der ersten Stelle seines Sendezeitzyklus steht.

Eine zweite Möglichkeit der Markierung eines Funktelegrammes kann darin liegen, daß man für das erste Funktelegramm einen Sendezeitpunkt vorgibt, der außerhalb des normalen Zeithubes liegt (beim oben betrachteten 8-Bitmodell: außerhalb der 256 Zeittakte). Für diese durch ihre zeitliche Lage ausgezeichnete Funktelegramme kann man beim oben näher geschilderten 8 x 8-Modell einen Zeittaktbereich zwischen 2 304 und 2 559 vorsehen.

Dies kann man dadurch erreichen, daß man durch eine übergeordnete Ablaufsteuerung des Wärmeverbrauchsmessers in Abhängigkeit von den dort mitgezählten Ausgangsimpulsen des Komparators 46 den Inhalt des Speichers 102 zwischen 2048 und 2303 umschaltet.

Eine weitere Möglichkeit der Heraushebung eines Funktelegrammes aus den anderen liegt darin, in diesem einen Funktelegramm eine andere Art der Bildung des Prüfstrings zu verwenden. Die kann man so bewerkstelligen, daß eine übergeordnete Ablaufsteuerung in Abhängigkeit von den dort mitgezählten Ausgangsimpulsen des Komparators 46 den Inhalt des Speichers 32 zwischen zwei Werten umschaltet. Die Empfangseinheit prüft dann laufend, nach welchem der beiden Algorithmen Daten und Prüfstring zusammenpassen und erkennt so das ausgezeichnete Funktelegramm. Er weiß dann, daß dieses Funktelegramm dem ersten Sendezeit-Sollwert entspricht und kann sich entsprechend neu auf das Endgerät synchronisieren.

Ist die Zeiteinheit grob (z.B. D = 8 Sekunden), könnte bei der geringen Kürze der einzelnen Funktelegramme (typischerweise 1 bis 100 ms) bei sehr genau gleichlaufenden Taktgeneratoren 50 der verschiedenen Verbrauchsmeßgeräte bzw. Sensoren der Fall eintreten, daß die verschiedenen Verbrauchsmeßgeräte oder Sensoren innerhalb einer Periode von 8 s alle weitgehend gleichzeitig senden. Man hätte dann zwar eine statistische Verteilung der Funktelegramme im durch die Zeiteinheit D aufgespannten Raum, in Echtzeit ergäbe sie jedoch eine Häufung der Funkkanalbelastung z. B. bei 8 s, 16 s, 24 s, ... usw.

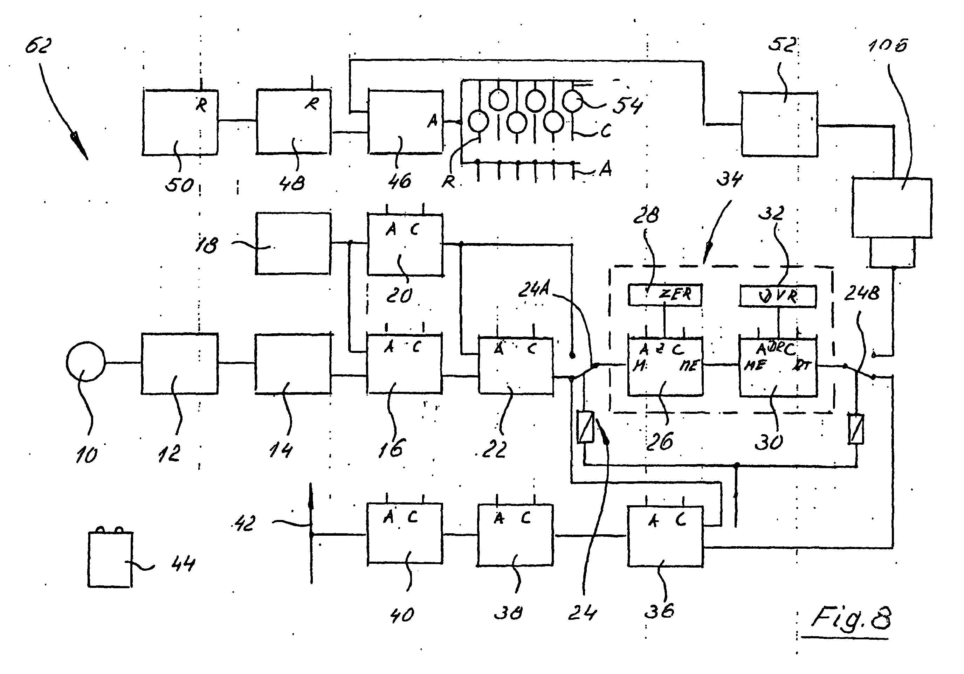

Um auch innerhalb der Zeiteinheit D noch für eine gleichmäßige Auslastung des Funkkanales zu sorgen, kann man den Sendezeit-Sollwert zusätzlich noch innerhalb eines Zeitrasters stochastisch verschieben. Dies kann man z.B. mit der in Figur 8 gezeigten Abwandlung des Ausführungsbeispieles von Figur 1 bewerkstelligen.

Das Ausgangssignal des Divisionskreises 30 wird nicht direkt auf den Eingang des Skalierkreises 52 gegeben, vielmehr unter Zwischenschaltung eines Zeichenverkettungskreises 106. Dieser setzt die auf seine beiden Eingänge gegebenen digitalen Signale zu einem Wort doppelter Länge zusammen. Auf Grund der oben beschriebenen Arbeitsweise des Prüfstring-Rechenkreises 34 ist dieses Signal dann, wenn die beiden Schaltkontakte 24A und 24B ihre obere Stellung einnehmen, ein in Abhängigkeit von der Geräte-Identifierungsnummer erstelltes stochastisches Signal.

Entsprechend hat auch die auf den Sollwert-Eingang des Komparators 46 gegebene Zahl zwei Hälften, die gleichermaßen in gerätespezifischer Weise stochastisch vorgegeben sind.

Läßt man nun den Taktgeber 50 so viel schneller laufen, wie dies der Anzahl der durch den Zeichenverkettungskreis 102 hinzugefügten Zeichen entspricht, und gibt man dem Zähler 48 entsprechend mehr Stellen, so erhält man genau den oben angesprochenen gewünschten Effekt, daß die einzelnen Verbrauchsmeßgeräte bzw. Sensoren in größeren zeitlichen Abständen senden, wobei aber die genaue Lage des übermittelten Funktelegrammes innerhalb der Zeiteinheit nochmals stochastisch variiert ist, so daß sich auch innerhalb des Echtzeitrasters eine Gleichverteilung der Belastung des Funkkanales ergibt.

Obenstehend wurde die Erfindung unter Bezugnahme auf Blockschaltbilder elektronischer Schaltungen erläutert. Es versteht sich, daß man das erfindungsgemäße Verfahren auch unter Verwendung eines entsprechend programmierten Rechners durchführen kann.

## Patentansprüche

1. Verfahren zum unidirektionalen Übertragen von Meß- oder Verbrauchsdaten von mehreren Endgeräten wie Verbrauchsmessgeräten oder Sensoren zu mindestens einer Empfangseinheit, bei welchem in den Endgeräten Datenstrings gebildet werden, die jeweils zusätzlich zur Nutzinformation wie Zählerstand oder Messwert eine eindeutige Identifikationsnummer des jeweiligen Endgerätes umfassen, bei welchem die Datenstrings der verschiedenen mit der Empfangseinheit zusammenarbeitenden Endgeräte zu wechselnd vorgegebenen Sendezeiten von den Endgeräten an die Empfangseinheit übertragen werden, wobei die Endgeräte jeweils über einen vorgegebenen begrenzten Satz unterschiedlicher Sendezeit-Sollwerte verfügen und die einzelnen Sendezeit-Sollwerte nacheinander in den Endgeräten zur Vorgabe jeweils einer Sendezeit verwendet werden und diese Folgen von Sendezeit-Sollwerten für verschiedene Endgeräte unterschiedlich sind, **dadurch gekennzeichnet, daß** die Sendezeit-Sollwerte ganze Zahlen sind und die Sendezeiten aus den Sendezeit-Sollwerten durch Multiplikation der letzteren mit einer Zeiteinheit bestimmt werden, und daß die Zeiteinheit so gewählt ist, daß die maximale Drift eines Sendezeit-Istwertes der Endgeräte zwischen aufeinanderfolgenden Funktelegrammen stets kleiner ist als eine halbe Zeiteinheit.

2. Verfahren nach Anspruch 1, **dadurch gekennzeichnet, daß** die Sendezeit-Sollwerte zyklisch nacheinander in den Endgeräten verwendet werden.

3. Verfahren nach Anspruch 1 oder 2, **dadurch gekennzeichnet, daß** jeder Identifikationsnummer eindeutig eine Folge von Sendezeit-Sollwerten zugeordnet ist.

4. Verfahren nach einem der Ansprüche 1 bis 3, **dadurch gekennzeichnet, daß** die ganzen Zahlen der Sendezeit-Sollwerte durch bestimmte Bits der Identifikationsnummer oder einer aus dieser abgeleiteten Bitfolge gebildet sind.

5. Verfahren nach einem der Ansprüche 1 bis 4, **dadurch gekennzeichnet, daß** in den Folgen der Sendezeit-Sollwerte für die verschiedenen Endgeräte jeweils mindestens ein Markier-Sendezeit-Sollwert ist, dessen Wertbereich sich vom Wertbereich aller übrigen Sendezeit-Sollwerte unterscheidet, insbesondere größer ist als die Summe der beiden nächstgrößten Sendezeit-Sollwerte der Folge.

6. Verfahren nach Anspruch 5, **dadurch gekennzeichnet, daß** die genannten Markier-Sendezeit-Sollwerte der einzelnen Folgen jeweils größer sind als die Summe der beiden insgesamt größten Sendezeit-Sollwerte aller Folgen.

7. Verfahren nach einem der Ansprüche 1 bis 6, **dadurch gekennzeichnet, daß** eine Zyklusnummer und/oder der jeweils aktive Sendezeit-Sollwert in den zu übertragenden Datenstring mit eingebaut wird.

8. Verfahren nach einem der Ansprüche 1 bis 7, **dadurch gekennzeichnet, daß** die Sendezeit-Sollwerte für ein Endgerät durch Parametrierung eines Zufallsgenerators unter Verwendung der Identifikationsnummer des Endgerätes bestimmt werden.

9. Verfahren nach Anspruch 8, **dadurch gekennzeichnet, daß** die Bestimmung der wechselnd verteilten Sendezeit-Sollwerte für ein Endgerät durch Division einer erweiterten Identifikationsnummer durch einen Divisor erhalten werden, wobei die Erweiterung der Identifikationsnummer durch einen vorgegebenen Zeichenstring erfolgt und der Sendzeit-Sollwert durch den Rest gebildet wird, der bei der Ganzzahldivision der erweiterten Identifikationsnummer durch den Divisor verbleibt.

10. Verfahren nach Anspruch 9, **dadurch gekennzeichnet, daß** der zur Erweiterung der Identifikationsnummer verwendete Zahlenstring gleiche Länge hat wie der Divisorstring.

11. Verfahren nach Anspruch 10, **dadurch gekennzeichnet, daß** der die Identifikationsnummer erweiternde Zahlenstring aus Nullen aufgebaut ist.

12. Verfahren nach einem der Ansprüche 9 bis 11, **dadurch gekennzeichnet, daß** der Sendezeit-Sollwert durch CRC-Division der erweiterten Identifikationsnummer durch den Divisor erhalten wird.

13. Verfahren nach Anspruch 12, **dadurch gekennzeichnet, daß** die CRC-Division mittels eines CRC-Polynoms erfolgt, welches auch zur Fehlerprüfung bei der Datenübertragung verwendet wird.

14. Verfahren nach Anspruch 8, **dadurch gekennzeichnet, daß** die Bestimmung der wechselnd verteilten Sendezeit-Sollwerte für ein Endgerät durch Multiplikation der Identifikationsnummer mit einem Multiplikator erhalten wird, wobei der Sendezeit-Sollwert durch niederrangige Bits des Ergebnisses der Multiplikation gebildet wird.

15. Verfahren nach Anspruch 14, **dadurch gekennzeichnet, daß** die Multiplikation von Identifikationsnummer und Multiplikator durch Addition unter Vernachlässigung von Überläufen erfolgt.

16. Verfahren nach einem der Ansprüche 9 bis 15, **dadurch gekennzeichnet, daß** die unterschiedlichen Sendezeitfenster-Sollwerte für ein Endgerät **dadurch** erhalten werden, daß man die Identifikationsnummer zyklisch rotiert und die so erhaltenen Zahlen, ggf. nach Erweiterung durch einen festen Zahlenstring, durch den Divisor teilt bzw. mit dem Multiplikator multipliziert.

17. Verfahren nach einem der Ansprüche 1 bis 16, **dadurch gekennzeichnet, daß** einem Endgerät mehrere Identifikationsnummern zugeordnet werden.

18. Verfahren nach einem der Ansprüche 1 bis 17, **dadurch gekennzeichnet, daß** alle Sendezeit-Sollwerte für die verschiedenen Endgeräte in der Empfangseinheit berechnet oder gespeichert werden und die Empfangseinheit ein steuerbares Empfangsteil aufweist, welches aktiviert wird, wenn die Zeit einer Uhr der Empfangseinheit einen der Sendezeit-Sollwerte der verschiedenen Sendegeräte erreicht.

19. Verfahren nach Anspruch 18, **dadurch gekennzeichnet, daß** die Sendezeit-Sollwerte in der Empfangseinheit auf die gleiche Weise aus den Identifikationsnummern der Endgeräte bestimmt werden wie in den Endgeräten

20. Verfahren nach einem der Ansprüche 1 bis 18, **dadurch gekennzeichnet, daß** die Sendezeit-Sollwerte, die jeweils einem Endgerät zugeordnet sind, in einem dem Endgerät zugeordneten Sollwert-Speicherfeld eines Speichers der Empfangseinheit abgelegt sind und die Empfangseinheit ein steuerbares Empfangsteil aufweist, welches aktiviert wird, wenn die Zeit einer Uhr der Empfangseinheit einen der gespeicherten Sendezeit-Sollwerte der verschiedenen Endgeräte erreicht.

21. Verfahren nach einem der Ansprüche 1 bis 20, **dadurch gekennzeichnet, daß** die Sendezeit-Sollwerte für die verschiedenen Endgeräte und Datenstring-Empfangszeiten für die verschiedenen Endgeräte in der Empfangseinheit gespeichert werden und zumindest der Unterschied zwischen einem Sendezeit-Sollwert und der entsprechenden Datenstring-Empfangszeit zur Bestimmung eines nächsten Empfangszeit-Sollwerts verwendet wird.

22. Verfahren nach einem der Ansprüche 1 bis 21, **dadurch gekennzeichnet, daß** in der Empfangseinheit Empfangszeit-Sollwerte in Abhängigkeit von mindestens einem Parameter modifiziert werden, der aus der nachstehenden Gruppe ausgewählt ist: Vorhergehend erhaltende Zählerstände eines oder mehrerer Endgeräte, mittlere Temperatur in der Umgebung eines Endgerätes oder einer Gruppe von Endgeräten, Betriebszeiten der Endgeräte.

23. Verfahren nach einem der Ansprüche 1 bis 22, **dadurch gekennzeichnet, daß** von den Datenstrings, die zu den verschiedenen Sendezeit-Sollwerten des Satzes von Sendezeit-Sollwerten gebildet werden, einer markiert wird.

24. Verfahren nach Anspruch 23, **dadurch gekennzeichnet, daß** das Markieren durch Setzen eines Markierbits im Datenstring erfolgt.

25. Verfahren nach Anspruch 23, **dadurch gekennzeichnet, daß** das Markieren des Datenstrings **dadurch** erfolgt, daß für diesen Datenstring ein besonderer Prüfstring-Algorithmus verwendet wird.

26. Verfahren nach einem der Ansprüche 1 bis 25, **dadurch gekennzeichnet, daß** der Sendezeit-Sollwert innerhalb einer Elementarzeit, in welcher die Sendezeit-Sollwerte als ganze Zahlen dargestellt werden, statistisch variiert wird.

27. Verfahren nach Anspruch 26, **dadurch gekennzeichnet, daß** das statistische Variieren der Sendezeit-Sollwerte innerhalb der Elementarzeit unter Verwendung derselben Zufallszahlen erfolgt, die auch zum Bestimmen der Sendezeit-Sollwerte in ganzen Zahlen verwendet werden.

## Claims

1. Method of unidirectional transmission of measurement or consumption data of multiple terminals such as consumption meters or sensors to at least one receiving unit, wherein, in the terminals, data strings, each of which includes, in addition to the payload information such as the meter reading or measured value, a unique identification number of the relevant terminal, and wherein the data strings of the various terminals which work with the receiving unit are transmitted by the terminals to the receiving unit at alternately predetermined transmission times, wherein the terminals each have a predetermined restricted set of different transmission time setpoint values, and the individual transmission time setpoint values are used in succession in the terminals to specify a transmission time, and these sequences of transmission time setpoint values are different for different terminals, **characterized in that** the transmission time setpoint values are whole numbers, and the transmission times are determined from the transmission time setpoint values by multiplying the latter by a time unit, and **in that** the time unit is chosen so that the maximum drift of a transmission time actual value of the terminals between successive radio telegrams is always less than half a time unit.

2. Method according to Claim 1, **characterized in that** the transmission time setpoint values are used cyclically one after the other in the terminals.

3. Method according to Claim 1 or 2, **characterized in that** a sequence of transmission time setpoint values is uniquely assigned to each identification number.

4. Method according to one of Claims 1 to 3, **characterized in that** the whole numbers of the transmission time setpoint values are formed by specified bits of the identification number or a bit sequence derived from it.

5. Method according to one of Claims 1 to 4, **characterized in that** in each of the sequences of transmission time setpoint values for the different terminals, there is at least one marker transmission time setpoint value, the value range of which differs from the value range of all other transmission time setpoint values, and in particular is greater than the sum of the two next greater transmission time setpoint values of the sequence.

6. Method according to Claim 5, **characterized in that** the above-mentioned marker transmission time setpoint values of the individual sequences are each greater than the sum of the two in total greatest transmission time setpoint values of all sequences.

7. Method according to one of Claims 1 to 6, **characterized in that** a cycle number and/or the currently active transmission time setpoint value is built into the data string to be transmitted.

8. Method according to one of Claims 1 to 7, **characterized in that** the transmission time setpoint values for a terminal are determined by parameterising a random number generator using the identification number of the terminal.

9. Method according to Claim 8, **characterized in that** the determination of the alternately distributed transmission time setpoint values for a terminal is obtained by dividing an extended identification number by a divisor, the identification number being extended by a predetermined character string, and the transmission time setpoint value being formed by the remainder on integer division of the extended identification number by the divisor.

10. Method according to Claim 9, **characterized in that** the number string which is used to extend the identification number has the same length as the divisor string.

11. Method according to Claim 10, **characterized in that** the number string which extends the identification number consists of zeros.

12. Method according to one of Claims 9 to 11, **characterized in that** the transmission time setpoint value is obtained by CRC division of the extended identification number by the divisor.

13. Method according to Claim 13, **characterized in that** the CRC division is done by means of a CRC polynomial, which is also used for error checking on data transmission.

14. Method according to Claim 8, **characterized in that** the determination of the alternately distributed transmission time setpoint values for a terminal is obtained by multiplying the identification number by a multiplier, the transmission time setpoint value being formed by low-order bits of the result of the multiplication.

15. Method according to Claim 14, **characterized in that** the multiplication of identification number and multiplier is done by addition, neglecting overflows.

16. Method according to one of Claims 9 to 15, **characterized in that** the different transmission time window setpoint values for a terminal are obtained by rotating the identification number cyclically, and dividing the thus obtained numbers by the divider or multiplying them by the multiplier, if necessary after extension by a fixed number string.

17. Method according to one of Claims 1 to 16, **characterized in that** multiple identification numbers are assigned to one terminal.

18. Method according to one of Claims 1 to 17, **characterized in that** all transmission time setpoint values for the different terminals are calculated or stored in the receiving unit, and the receiving unit has a controllable receiving part, which is activated when the time of a clock of the receiving unit reaches one of the transmission time setpoint values of the different transmitting devices.

19. Method according to Claim 18, **characterized in that** in the receiving unit, the transmission time setpoint values are determined from the identification numbers of the terminals in the same way as in the terminals.

20. Method according to one of Claims 1 to 18, **characterized in that** the transmission time setpoint values which are each assigned to a terminal are held in a setpoint value memory field, which is assigned to the terminal, of a memory of the receiving unit, and the receiving unit has a controllable receiving part, which is activated when the time of a clock of the receiving unit reaches one of the stored transmission time setpoint values of the different terminals.

21. Method according to one of Claims 1 to 20, **characterized in that** the transmission time setpoint values for the different terminals and data string reception times for the different terminals are stored in the receiving unit, and at least the difference between a transmission time setpoint value and the corresponding data string reception time is used to determine a next reception time setpoint value.

22. Method according to one of Claims 1 to 21, **characterized in that** in the receiving unit, reception time setpoint values are modified depending on at least one parameter which is selected from the following group: previously obtained meter readings of one or more terminals, mean temperature in the environment of a terminal or group of terminals, operating times of the terminals.

23. Method according to one of Claims 1 to 22, **characterized in that** of the data strings which are formed into the different transmission time setpoint values of the set of transmission time setpoint values, one is marked.

24. Method according to Claim 23, **characterized in that** the marking is done by setting a marker bit in the data string.

25. Method according to Claim 23, **characterized in that** the data string is marked by a special test string algorithm being used for this data string.

26. Method according to one of Claims 1 to 25, **characterized in that** the transmission time setpoint value is varied statistically within an elementary time, in which the transmission time setpoint values are represented as whole numbers.

27. Method according to Claim 26, **characterized in that** the transmission time setpoint values are varied within the elementary time using the same random numbers as are used to determine the transmission time setpoint values in whole numbers.

## Revendications

1. Procédé de transmission unidirectionnelle de données de mesure ou de consommation de plusieurs dispositifs terminaux tels que des appareils de mesure de consommation ou des capteurs à au moins une unité de réception, selon lequel sont formées dans les dispositifs terminaux des chaînes de données qui comprennent chacune, en plus de l'information utile telle que position de compteur ou valeur de mesure, un numéro d'identification univoque du dispositif terminal respectif, selon lequel les chaînes de données des différents dispositifs terminaux coopérant avec l'unité de réception sont transmises à des temps d'émission prédéfinis de manière variable des dispositifs terminaux à l'unité de réception, les dispositifs terminaux disposant chacun d'un jeu limité prédéfini de différentes valeurs de consigne de temps d'émission et les différentes valeurs de consigne de temps d'émission sont utilisées les unes après les autres dans les dispositifs terminaux pour prescrire chaque fois un temps d'émission et ces suites de valeurs de consigne de temps d'émission sont différentes pour différents dispositifs terminaux, **caractérisé en ce que** les valeurs de consigne de temps d'émission sont des nombres entiers et les temps d'émission sont déterminés à partir des valeurs de consigne de temps d'émission par multiplication de ces dernières par une unité de temps, et **en ce que** l'unité de temps est choisie de manière que la dérive maximale d'une valeur réelle de temps d'émission des dispositifs terminaux entre des radiotélégrammes successifs soit toujours plus petite qu'une demi-unité de temps.

2. Procédé selon la revendication 1, **caractérisé en ce que** les valeurs de consigne de temps d'émission sont utilisées cycliquement l'une après l'autre dans les dispositifs terminaux.

3. Procédé selon la revendication 1 ou 2, **caractérisé en ce qu'**à chaque numéro d'identification est associée de manière univoque une suite de valeurs de consigne de temps d'émission.

4. Procédé selon l'une des revendications 1 à 3, **caractérisé en ce que** les nombres entiers des valeurs de consigne de temps d'émission sont formés par des bits définis du numéro d'identification ou d'une suite de bits dérivée de celui-ci.

5. Procédé selon l'une des revendications 1 à 4, **caractérisé en ce qu'**il existe dans les suites de valeurs de consigne de temps d'émission pour les différents dispositifs terminaux chaque fois au moins une valeur de consigne de temps d'émission de repérage dont la plage de valeurs diffère de la plage de valeurs de toutes les autres valeurs de consigne de temps d'émission, en particulier est supérieure à la somme des deux valeurs de consigne de temps d'émission immédiatement supérieures de la suite.

6. Procédé selon la revendication 5, **caractérisé en ce que** lesdites valeurs de consigne de temps d'émission de repérage des différentes suites sont chaque fois supérieures à la somme des deux plus grandes valeurs de consigne de temps d'émission de toutes les suites.

7. Procédé selon l'une des revendications 1 à 6, **caractérisé en ce qu'**un numéro de cycle et/ou la valeur de consigne de temps d'émission respectivement active est intégré(e) dans la chaîne de données à transmettre.

8. Procédé selon l'une des revendications 1 à 7, **caractérisé en ce que** les valeurs de consigne de temps d'émission pour un dispositif terminal sont déterminées par paramétrage d'un générateur de nombres aléatoires en utilisant le numéro d'identification du dispositif terminal.

9. Procédé selon la revendication 8, **caractérisé en ce que** la détermination des valeurs de consigne de temps d'émission réparties de manière variable pour un dispositif terminal est obtenue en divisant un numéro d'identification étendu par un diviseur, l'extension du numéro d'identification s'effectuant par une chaîne de caractères prédéfinie et la valeur de consigne de temps d'émission étant formée par le reste de la division entière du numéro d'identification étendu par le diviseur.

10. Procédé selon la revendication 9, **caractérisé en ce que** la chaîne numérique utilisée pour l'extension du numéro d'identification a la même longueur que la chaîne de diviseur.

11. Procédé selon la revendication 10, **caractérisé en ce que** la chaîne numérique qui étend le numéro d'identification est constituée de zéros.

12. Procédé selon l'une des revendications 9 à 11, **caractérisé en ce que** la valeur de consigne de temps d'émission est obtenue par division CRC du numéro d'identification étendu par le diviseur.

13. Procédé selon la revendication 12, **caractérisé en ce que** la division CRC est effectuée au moyen d'un polynôme de CRC, lequel est aussi utilisé pour le contrôle des erreurs lors de la transmission de données.

14. Procédé selon la revendication 8, **caractérisé en ce que** la détermination des valeurs de consigne de temps d'émission réparties de manière variable pour un dispositif terminal est obtenue en multipliant le numéro d'identification par un multiplicateur, la valeur de consigne de temps d'émission étant formée par des bits de rang inférieur du résultat de la multiplication.

15. Procédé selon la revendication 14, **caractérisé en ce que** la multiplication du numéro d'identification et du multiplicateur est effectuée par addition en négligeant les débordements.

16. Procédé selon l'une des revendications 9 à 15, **caractérisé en ce que** les différentes valeurs de consigne de fenêtre de temps d'émission pour un dispositif terminal sont obtenues par rotation cyclique du numéro d'identification et les nombres ainsi obtenus, le cas échéant après extension par une chaîne numérique fixe, sont divisés par le diviseur ou multipliés par le multiplicateur.

17. Procédé selon l'une des revendications 1 à 16, **caractérisé en ce que** plusieurs numéros d'identification sont affectés à un dispositif terminal.

18. Procédé selon l'une des revendications 1 à 17, **caractérisé en ce que** toutes les valeurs de consigne de temps d'émission pour les différents dispositifs terminaux sont calculées ou mémorisées dans l'unité de réception et l'unité de réception présente une partie réceptrice commandable qui est activée quand le temps d'une horloge de l'unité de réception atteint une des valeurs de consigne de temps d'émission des différents émetteurs.

19. Procédé selon la revendication 18, **caractérisé en ce que** les valeurs de consigne de temps d'émission sont déterminées dans l'unité de réception de la même manière que dans les dispositifs terminaux à partir des numéros d'identification des dispositifs terminaux.

20. Procédé selon l'une des revendications 1 à 18, **caractérisé en ce que** les valeurs de consigne de temps d'émission qui sont associées à un dispositif terminal sont stockées dans une zone de mémoire de valeurs de consigne associée au dispositif terminal d'une mémoire de l'unité de réception et l'unité de réception présente une partie réceptrice commandable qui est activée quand le temps d'une horloge de l'unité de réception atteint une des valeurs de consigne de temps d'émission mémorisées des différents dispositifs terminaux.

21. Procédé selon l'une des revendications 1 à 20, **caractérisé en ce que** les valeurs de consigne de temps d'émission pour les différents dispositifs terminaux et les temps de réception de chaîne de données pour les différents dispositifs terminaux sont mémorisés dans l'unité de réception et au moins la différence entre une valeur de consigne de temps d'émission et le temps de réception de chaîne de données correspondant est utilisée pour déterminer une valeur de consigne de temps de réception suivante.

22. Procédé selon l'une des revendications 1 à 21, **caractérisé en ce que** dans l'unité de réception, des valeurs de consigne de temps de réception sont modifiées en fonction d'au moins un paramètre qui est sélectionné dans le groupe ci-après : positions de compteur obtenues précédemment d'un ou plusieurs dispositifs terminaux, température moyenne dans l'environnement d'un dispositif terminal ou d'un groupe de dispositifs terminaux, temps de fonctionnement des dispositifs terminaux.

23. Procédé selon l'une des revendications 1 à 22, **caractérisé en ce que** parmi les chaînes de données qui sont formées en les différentes valeurs de consigne de temps d'émission du jeu de valeurs de consigne de temps d'émission, l'une est repérée.

24. Procédé selon la revendication 23, **caractérisé en ce que** le repérage s'effectue par mise à un d'un bit de repérage dans la chaîne de données.

25. Procédé selon la revendication 23, **caractérisé en ce que** le repérage de la chaîne de données s'effectue en utilisant un algorithme de chaîne de contrôle particulier pour cette chaîne de données.

26. Procédé selon l'une des revendications 1 à 25, **caractérisé en ce que** l'on fait varier statistiquement la valeur de consigne de temps d'émission dans les limites d'un temps élémentaire dans lequel les valeurs de consigne de temps d'émission sont représentées sous forme de nombres entiers.

27. Procédé selon la revendication 26, **caractérisé en ce que** la variation statistique des valeurs de consigne de temps d'émission dans les limites du temps élémentaire s'effectue en utilisant le même générateur de nombres aléatoires que celui qui est utilisé pour déterminer les valeurs de consigne de temps d'émission en nombres entiers.
